# FASCICULE DE BREVET EUROPEEN

(11) **EP 0 970 853 B1**
(45) Date de publication et mention de la délivrance du brevet: **23.07.2003**
(21) Numéro de dépôt: 99401026.2
(22) Date de dépôt: 27.04.1999
(51) Int. Cl.: B60R 16/02

(54) **Dispositif de traversée étanche d'un faisceau électrique par une ouverture de passage d'un tablier d'un véhicule automobile et procédé de montage du faisceau électrique**
Dichte Durchlassvorrichtung eines elektrischen Kabelbaumes durch die Durchführungsöffunug einer Fahrzeugspritzwand und Montageverfahren des elektrischen Kabelbaumes
Sealed passage for an electric wire harness through a vehicle cowl opening and wire harness mounting process

(30) Priorité: 08.07.1998 FR 9808761
(43) Date de publication de la demande: 12.01.2000
(73) Titulaire: AUTOMOBILES PEUGEOT, 75116 Paris (FR); AUTOMOBILES CITROEN, 92200 Neuilly-sur-Seine (FR)
(72) Inventeur: Bloret, Jean-Pierre, 35700 Rennes (FR)
(74) Mandataire: Bouget, Lucien

(56) Documents cités:
- FR-A- 2 747 449
- US-A- 5 353 472
- PATENT ABSTRACTS OF JAPAN vol. 097, no. 008, 29 août 1997 (1997-08-29) & JP 09 092060 A (SUMITOMO WIRING SYST LTD), 4 avril 1997 (1997-04-04)
- PATENT ABSTRACTS OF JAPAN vol. 096, no. 003, 29 mars 1996 (1996-03-29) & JP 07 298455 A (SUMITOMO WIRING SYST LTD), 10 novembre 1995 (1995-11-10)
- PATENT ABSTRACTS OF JAPAN vol. 097, no. 009, 30 septembre 1997 (1997-09-30) & JP 09 129064 A (SUMITOMO WIRING SYST LTD), 16 mai 1997 (1997-05-16)

## Description

L'invention concerne un dispositif de traversée étanche d'un faisceau électrique par une ouverture de passage d'un tablier de véhicule automobile et un procédé de montage du faisceau électrique.

Un dispositif selon le préambule de la revendication 1 est connu du document FR-A-2747449.

Les véhicules automobiles comportent un compartiment moteur dans lequel sont disposés, outre le moteur de propulsion du véhicule, divers équipements ou accessoires et un habitacle dans lequel prennent place le conducteur et les passagers du véhicule automobile. L'habitacle est séparé du compartiment moteur par un tablier qui est une paroi constituée par une tôle disposée du côté du compartiment moteur, revêtue du côté de l'habitacle, par une couche de matériau d'insonorisation, elle-même recouverte par un garnissage. Pour assurer une liaison électrique entre différents composants situés dans le compartiment moteur et des moyens de commande, d'éclairage ou de signalisation situés dans l'habitacle, il est nécessaire de faire passer un faisceau électrique à travers le tablier du véhicule, par une ouverture de passage prévue dans le tablier.

On doit prévoir un dispositif permettant d'assurer la traversée du faisceau par l'ouverture de passage du tablier et une bonne isolation, en particulier acoustique, entre le compartiment moteur et l'habitacle, dans l'ouverture de passage, autour du faisceau électrique.

Pour cela, on utilise généralement une pièce de révolution en un matériau élastomère comportant une partie interne de forme générale tubulaire prévue pour recevoir et maintenir avec un certain serrage une olive solidaire du faisceau. On assure ainsi un montage et une fixation du faisceau dans la pièce de traversée, de telle manière que l'alésage de la partie interne de la pièce de traversée soit fermée par l'olive et le faisceau électrique.

La pièce de traversée comporte de plus une partie externe constituée par des lèvres souples d'étanchéité de forme annulaire destinées à venir en appui, respectivement, sur la surface externe du tablier dirigée vers le compartiment moteur et sur la surface externe du tablier dirigée vers l'habitacle. Les lèvres d'étanchéité de la partie externe de la pièce de traversée permettent d'assurer la fixation de la pièce de traversée et du faisceau dans l'ouverture du tablier et une certaine isolation entre le compartiment moteur et l'habitacle du véhicule automobile au niveau de l'ouverture.

Cependant, l'introduction et le montage d'une telle pièce de traversée dans l'ouverture du tablier d'un véhicule automobile, qui sont réalisés dans le sens allant du compartiment moteur vers l'habitable, nécessitent de déformer la pièce de traversée pour permettre son introduction dans l'ouverture et en particulier de déformer des lèvres d'étanchéité souples qui doivent être mises en appui dans une position satisfaisante de fermeture, à l'issue du montage.

Une telle opération de montage d'une pièce de traversée d'un faisceau électrique de véhicule automobile est d'une réalisation délicate et ne permet pas de garantir une mise en place parfaite des lèvres d'étanchéité contre les surfaces externes du tablier et donc la réalisation d'une très bonne isolation acoustique entre le compartiment moteur et l'habitacle.

En outre, après le montage de la pièce de traversée, il est nécessaire de réaliser, depuis l'habitacle du véhicule, l'introduction du faisceau dans la partie interne de la pièce de traversée et la mise en place de l'olive dont le diamètre est sensiblement supérieur au diamètre du faisceau, dans la partie interne de la pièce de traversée.

Cette opération de mise en place du faisceau est particulièrement délicate et s'accompagne d'efforts exercés sur la pièce de traversée qu'il est nécessaire de maintenir dans l'ouverture du tablier.

Un inconvénient supplémentaire des pièces de traversée selon l'art antérieur est que la fixation de ces pièces dans l'ouverture du tablier réalisée par des lèvres souples ne permet pas d'atteindre une très forte résistance à l'arrachement.

Le but de l'invention est donc de proposer un dispositif de traversée étanche d'un faisceau électrique par une ouverture de passage du faisceau à travers un tablier d'un véhicule automobile, séparant le compartiment moteur de l'habitacle du véhicule automobile, réalisé sous la forme d'une pièce de révolution en élastomère comportant une partie interne de forme générale tubulaire destinée à recevoir une olive incorporée au faisceau électrique et une partie externe, coaxiale à la partie interne, comprenant une première et une seconde lèvres d'étanchéité annulaires destinées à venir en appui respectivement, sur une surface externe du tablier du côté du compartiment moteur et sur une surface externe du tablier, du côté de l'habitacle, autour de l'ouverture de traversée, ce dispositif permettant d'assurer une très bonne isolation en particulier acoustique entre le compartiment moteur et l'habitacle du véhicule automobile, tout en facilitant le montage du dispositif dans l'ouverture du tablier.

Dans ce but, la seconde lèvre d'étanchéité annulaire est constituée par une jupe évasée comportant une zone annulaire déformable élastiquement pour permettre le déplacement par pivotement autour de la zone annulaire d'une partie au moins de la jupe comportant un bord d'extrémité libre constituant la partie de la jupe dont le diamètre est maximal entre une première position stable dans laquelle la jupe est rabattue en direction d'une extrémité du dispositif dirigée vers l'habitacle et une seconde position stable dans laquelle la jupe est rabattue vers le compartiment moteur et vient en appui par son bord libre sur la surface externe du tablier dirigée vers l'habitacle, dans sa position de montage sur le véhicule automobile.

Le dispositif suivant l'invention peut comporter également des moyens permettant de faciliter le montage et d'améliorer la fixation du dispositif sur le tablier du véhicule automobile.

Le dispositif suivant l'invention peut également être conçu de manière à faciliter l'introduction de l'olive du faisceau électrique dans la partie interne du dispositif, en particulier en utilisant un procédé de montage suivant l'invention.

Afin de bien faire comprendre l'invention, on va décrire, à titre d'exemples, en se référant aux figures jointes en annexe, deux modes de réalisation d'un dispositif de fixation suivant l'invention et le procédé de montage du faisceau électrique.

La figure 1 est une vue en perspective d'un dispositif de traversée étanche d'un faisceau électrique, suivant l'invention.

La figure 2 est une vue en coupe axiale, suivant 2-2 de la figure 3, du dispositif représenté sur la figure 1 en position de montage dans une ouverture d'un tablier de véhicule automobile.

La figure 3 est une vue en coupe suivant 3-3 de la figure 2.

La figure 4 est une vue en coupe axiale d'une partie d'extrémité d'un dispositif de traversée tel que représenté sur la figure 2 maintenu en position d'introduction dans l'ouverture d'un tablier de véhicule automobile.

La figure 5 est une vue en perspective d'une bague de fixation du dispositif représenté sur les figures 1, 2 et 3.

La figure 6 est une vue latérale de la bague représentée sur la figure 5.

La figure 7A est une vue en coupe à grande échelle d'une partie de fermeture de la bague représentée sur les figures 5 et 6.

La figure 7B est une vue analogue à la vue de la figure 7A d'une partie de fermeture de la bague, suivant une variante de réalisation.

La figure 8 est une vue en coupe axiale d'un dispositif de traversée suivant l'invention et suivant une variante de réalisation.

La figure 9 est une vue en perspective d'une bague de fixation du dispositif représenté sur la figure 8.

La figure 10 est une vue en élévation et en coupe partielle d'une installation de montage du faisceau électrique dans un dispositif de traversée tel que représenté sur les figures 1, 2 et 3.

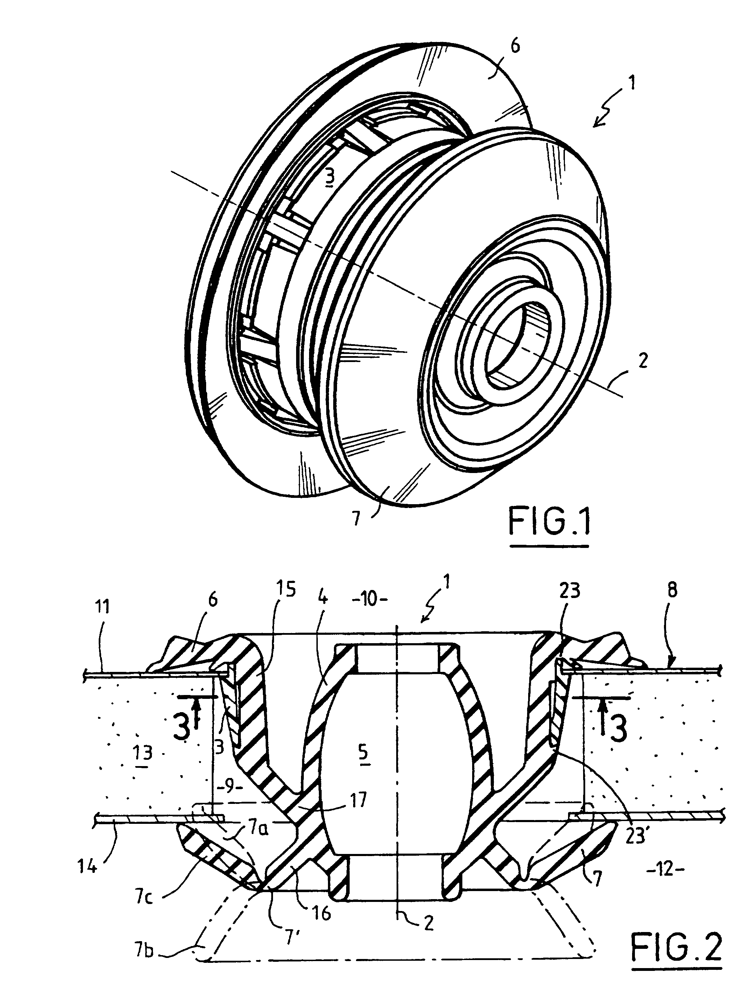

Sur la figure 1, on voit un dispositif de fixation suivant l'invention désigné de manière générale par le repère 1.

Comme il est visible sur les figures 1, 2 et 3, le dispositif de fixation 1 est constitué d'une pièce en un matériau élastomère tel que le caoutchouc, de révolution autour d'un axe 2 et constituant le corps du dispositif, ainsi qu'une bague 3 en matière plastique fixée autour d'une partie du corps en matériau élastomère, pour faciliter l'introduction du dispositif de fixation dans l'ouverture du tablier d'un véhicule automobile et assurer sa fixation.

Le corps en matériau élastomère du dispositif 1 comporte une partie interne 4 de forme globalement tubulaire, ménageant dans son alésage interne un logement 5 délimité par des surfaces courbes susceptibles d'assurer le logement d'une olive solidaire du faisceau électrique dont le dispositif 1 assure le passage étanche et la fixation.

Le dispositif de fixation 1 comporte de plus une partie externe présentant deux lèvres annulaires d'étanchéité et de fixation 6 et 7.

La figure 2 représente le dispositif de traversée 1 mis en place et fixé dans une ouverture traversante 9 du tablier 8 d'un véhicule automobile. Le tablier 8 du véhicule automobile est réalisé sous la forme d'une paroi qui comporte, du côté du compartiment moteur 10 du véhicule automobile, une tôle 11 recouverte, sur sa face dirigée vers l'habitacle 12 du véhicule automobile, par une couche d'insonorisation 13 elle-même revêtue sur sa face externe dirigée vers l'habitacle 12 par un garnissage 14.

Dans la position de montage du dispositif de fixation représenté sur la figure 1, le bord d'extrémité externe de la lèvre d'étanchéité annulaire 6 constituant la première lèvre d'étanchéité est en appui sur la face externe de la paroi 8 constituée par la surface de la tôle 11 dirigée vers le compartiment moteur 10 du véhicule automobile, autour de l'ouverture 9. L'ouverture 9 traversant la paroi 8 présente un diamètre légèrement inférieur, dans sa traversée de la tôle 11, à son diamètre de traversée de la couche d'insonorisation 13 et du garnissage 14. De ce fait, un rebord annulaire de la tôle se trouve légèrement en saillie vers l'intérieur de l'ouverture 9, sur lequel viennent s'appuyer des languettes de fixation de la bague 3, dans la position de montage du dispositif 1, comme il sera expliqué plus loin. La tôle 11 est alors prise entre le bord externe libre de la première lèvre 6 et les languettes de fixation de la bague 3.

La seconde lèvre d'étanchéité 7 vient s'appuyer, par son bord externe libre, sur la surface externe du garnissage 14 dirigée vers l'habitacle 12 du véhicule automobile, dans la position de montage du dispositif de traversée 1.

Selon l'invention, la seconde lèvre d'étanchéité 7 est constituée par une jupe ayant une forme générale tronconique évasée. La première lèvre d'étanchéité 6 et la seconde lèvre d'étanchéité 7 sont solidaires de la partie interne 4 du dispositif de traversée étanche 4, par l'intermédiaire de parois respectives 15 et 16 de forme générale tronconique, dont les lèvres d'étanchéité 6 et 7 constituent les parties d'extrémité externes.

Les parois 15 et 16 et les lèvres 6 et 7 constituant les parties d'extrémité souples de ces parois sont réalisées en une seule opération de moulage d'une matière élastomère avec la partie centrale 4 du dispositif 1. Les parois 15 et 16 et les lèvres d'étanchéité 6 et 7 constituent la partie externe du dispositif de traversée étanche 1. La partie externe du dispositif de traversée étanche 1 se raccorde à la partie interne dans une zone 17 du corps de la pièce en matériau élastomère ayant une forte épaisseur dans la direction axiale 2.

La seconde lèvre d'étanchéité 7 présente une partie de liaison 7' avec la paroi 16 dont l'épaisseur est inférieure à l'épaisseur de la paroi 16 et de la partie courante de la lèvre 7. Cette partie 7', qui est réalisée lors du moulage de la matière élastomère du corps du dispositif 1, présente une courbure telle que la lèvre 7 se trouve dans sa position 7b représentée en pointillés sur la figure 2, à l'état moulé, en l'absence de contraintes. La position 7b de la lèvre 7 représentée sur la figure 2 constitue une première position stable de la lèvre 7. Dans cette position, la partie 7' de la lèvre 7 ou partie déformable d'épaisseur réduite ne subit aucune contrainte.

La partie déformable 7' peut présenter une configuration retournée ou symétrique par rapport à un plan transversal perpendiculaire à l'axe 2 dans laquelle elle est également exempte de contraintes, la lèvre 7 étant alors dans sa position 7a, c'est-à-dire rabattue vers la partie du dispositif de fixation et de traversée étanche 1 dirigée vers le compartiment moteur 10 du véhicule, dans la position de montage de la figure 2.

Si l'on exerce sur la partie d'extrémité libre de la lèvre 7 un léger effort dans la direction axiale 2, à partir de l'une de ses positions 7a et 7b, la lèvre se déplace de sa position stable d'origine (7a ou 7b) à sa seconde position stable (7b ou 7a) sans qu'elle puisse se maintenir dans une position intermédiaire. En effet, dans toutes les positions intermédiaires de la lèvre 7, entre la position 7a et la position 7b, la partie 7' constituant une articulation de forme annulaire de la lèvre annulaire 7 se trouve comprimée de manière élastique et tend à ramener la lèvre 7 vers l'une de ses positions stables.

Comme il est visible sur la figure 2, dans la position de montage du dispositif de fixation et de passage étanche 1 dans l'ouverture 9 du tablier 8 d'un véhicule automobile, la lèvre 7, dont l'extrémité libre vient en appui sur la surface externe du garnissage 14 du tablier, se trouve dans une position 7c intermédiaire entre les positions 7a et 7b et proche de la position 7a. Dans cette position, la partie 7', qui est déformée en compression, exerce une force de rappel élastique sur la lèvre 7, de manière à assurer une mise en appui de l'extrémité libre de la lèvre 7 sur la surface externe du garnissage 14 et donc un contact étanche entre la lèvre 7 et la surface externe du garnissage.

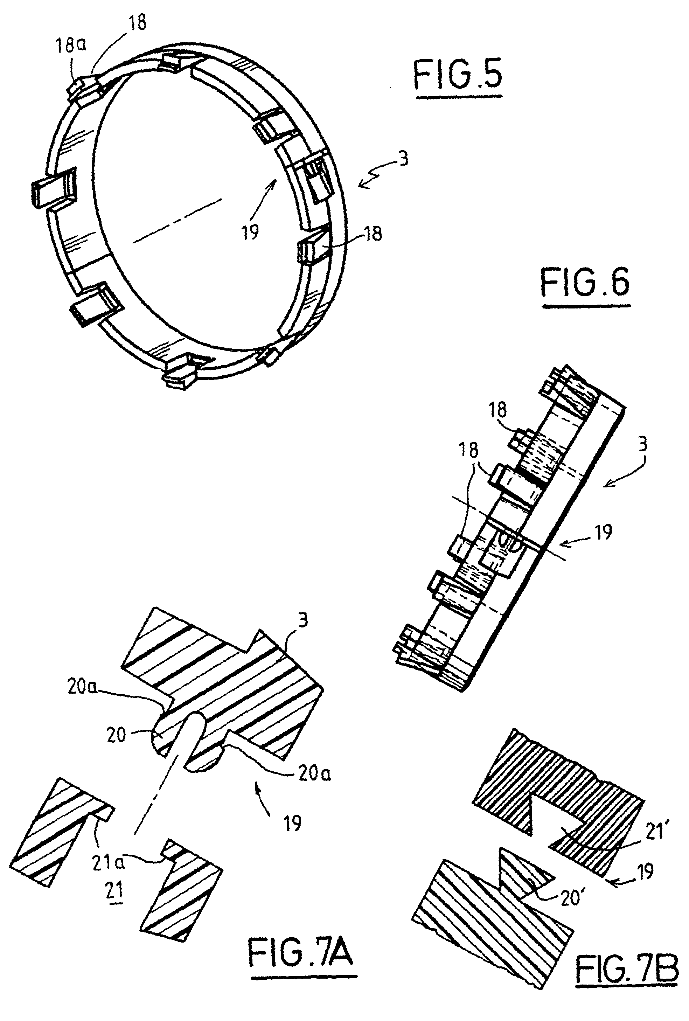

Sur les figures 5 et 6, on a représenté la bague 3 qui est associée au corps en matière élastomère du dispositif 1 pour faciliter l'introduction de ce dispositif dans l'ouverture 9 du tablier d'un véhicule automobile et permettre sa fixation sur la tôle constituant la partie du tablier dirigée vers le compartiment moteur. La bague 3 de forme générale annulaire est réalisée par moulage d'une matière plastique d'une dureté supérieure à la dureté de l'élastomère constituant le corps du dispositif de fixation 1. La bague 3 comporte des doigts pivotants 18 réalisés en une seule pièce avec le corps annulaire de la bague 3 et reliés à ce corps annulaire par des parties de faible épaisseur permettant aux doigts de se déplacer par pivotement dans une direction sensiblement radiale de la bague, lorsqu'ils sont soumis à une force dirigée vers l'intérieur de la bague 3 ou par retour élastique vers l'extérieur. Les doigts 18 comportent chacun à son extrémité opposée à l'extrémité d'articulation solidaire du corps de la bague 3, une encoche 18a ayant une certaine profondeur dans la direction radiale et terminée par un rebord axial vers l'intérieur.

Comme il est visible sur les figures 1 et 2, le corps annulaire de la bague 3 est maintenu sur le corps en matériau élastomère du dispositif d'étanchéité 1 par deux rebords 23, 23' en saillie dans la direction radiale, les rebords 23, 23' étant discontinus et laissant les doigts 18 libres de pivoter par rapport au corps en matériau élastomère. La fixation de la bague 3 sur le corps en matériau élastomère peut être réalisée lors du moulage du corps en matériau élastomère, par exemple par un procédé de surmoulage. Pour réaliser le dispositif d'étanchéité par surmoulage, on place la bague 3 réalisée précédemment par moulage, dans une partie périphérique de la cavité du moule de réalisation du corps en matériau élastomère et on injecte la matière élastomère de telle manière que la bague 3 se trouve intercalée entre les deux rebords 23, 23' assurant sa retenue sur la pièce à l'état moulé et vulcanisé.

On peut également réaliser séparément par moulage la bague 3 et le corps en matériau élastomère comportant un logement pour la bague 3, entre les deux rebords en saillie 23 et 23'. La bague 3 est ensuite engagée et moulée sur le corps en matériau élastomère, de manière à être intercalée entre les rebords 23 et 23' et retenue axialement par les rebords.

La bague 3 telle que représentée sur les figures 5 et 6 n'est pas réalisée de manière totalement continue mais comporte une zone de jonction 19. De part et d'autre de la zone de jonction 19, la bague présente des parties d'extrémité susceptibles d'être assemblées ou séparées constituant une agrafe, comme il est visible sur les figures 5 et 6 d'une part et 7A et 7B d'autre part.

Selon le mode de réalisation représenté sur la figure 7A, l'une des parties d'extrémité de la bague comporte deux becs d'assemblage 20 déformables par flexion comportant chacun un rebord de blocage 20a et l'autre partie d'extrémité du corps annulaire de la bague 3 comporte une ouverture de direction circonférentielle 21 dont la partie d'entrée comporte des rebords d'accrochage 21a en saillie vers l'intérieur de l'ouverture 21.

La largeur de l'ensemble constitué par les becs d'accrochage 20 dans la direction axiale est légèrement supérieure à la largeur d'entrée de l'ouverture 21 entre les rebords 21a et la surface externe des becs 20a comporte des parties arrondies de sorte que les becs 20a constituant une pince peuvent être introduits en force entre les rebords 21a, jusqu'à réaliser l'accrochage, par retour élastique des becs et accrochage des bords 20a contre les bords 21a, la fermeture de l'agrafe de la bague 3.

La bague 3 peut être remise en position d'ouverture en rapprochant les deux becs élastiques l'un de l'autre de manière à dégager les rebords 20a des rebords 21a et à extraire la pince constituée par les becs 20 de l'ouverture 21. En dégageant la pince 20 de l'ouverture 21, on réalise l'ouverture de l'agrafe d'assemblage des deux extrémités de la bague 3. On peut alors assurer une dilatation diamétrale de la partie externe du corps en matériau élastomère du dispositif de fixation 1.

Lorsque l'agrafe est en position fermée, la bague 3 serrée contre le corps en matériau élastomère du dispositif de fixation 1 permet l'engagement et la fixation de ce dispositif dans l'ouverture 9 du tablier d'un véhicule automobile.

Selon la variante de réalisation représentée sur la figure 78, l'agrafe peut être constituée sous la forme d'un assemblage en queue d'aronde comportant une partie mâle 20' et une partie femelle 21' constituée d'une ouverture dont la forme est analogue à la forme de la partie mâle 20'.

Le montage et la fixation du dispositif 1 dans l'ouverture 9 du tablier d'un véhicule automobile sont réalisés en engageant le dispositif dans l'ouverture 9 par le compartiment moteur du véhicule automobile. La seconde lèvre d'étanchéité 7 est placée à l'état rabattu vers l'extrémité du dispositif dirigée vers l'habitacle du véhicule automobile, c'est-à-dire dans sa position 7b représentée sur la figure 2. Le dispositif 1 est introduit axialement à la suite de la lèvre 7 dans l'ouverture 9, l'introduction de la pièce dans l'ouverture 9 étant facilitée par la présence de la bague 3 dont la rigidité est sensiblement supérieure à la rigidité du corps en matériau élastomère du dispositif 1 et dont le coefficient de frottement sur le métal de la tôle 11 est très inférieur au coefficient de frottement de la matière élastomère.

En fin d'introduction du dispositif 1 dans l'ouverture 9, la première lèvre d'étanchéité 6 se déforme par flexion ; les doigts pivotants 18 de la bague 3 qui comportent une surface inclinée par rapport à la direction de l'axe 2 sont repliés vers l'intérieur de manière à permettre le passage de la bague 3 et du dispositif 1 dans l'ouverture. En fin d'introduction pas poussée axiale sur le dispositif 1, les doigts 18 pivotent vers l'extérieur par élasticité, de telle sorte que leurs encoches 18a viennent se placer contre le rebord en saillie de l'ouverture de la tôle 11. On obtient ainsi un verrouillage du dispositif 1 à l'intérieur de l'ouverture 9, du fait des forces élastiques exercées par la première lèvre 6 sur la tôle 11 et de la surface plane des encoches des doigts 18 placée en-dessous de la partie en saillie de la tôle 11 contre la surface de la tôle à l'opposé de la surface externe dirigée vers le compartiment moteur 10.

En exerçant une légère poussée axiale sur la partie d'extrémité libre de la seconde lèvre d'étanchéité 7, on provoque le basculement de la seconde lèvre 7 par retour élastique, jusqu'à sa position 7c dans laquelle l'extrémité libre de la seconde lèvre 7 vient en appui étanche contre la surface externe du garnissage 14.

Le dispositif de fixation 1 est alors parfaitement maintenu dans l'ouverture 9 du tablier et l'ouverture 9 est fermée de manière étanche par la seconde lèvre d'étanchéité 7 du côté de l'habitacle 12 du véhicule automobile.

Pour effectuer le démontage du dispositif de traversée, on soulève localement la lèvre 6 du dispositif et on glisse un outil tel qu'un tournevis sous la lèvre 6 pour atteindre et repousser vers l'intérieur un premier doigt 18 de la bague 23, de façon à la dégager du rebord de la tôle 11. On recommence l'opération pour chacun des doigts 18 de la bague 3. On soulève la lèvre 7 à l'aide d'un tournevis pour la faire basculer dans la position 6b. On peut alors démonter le dispositif de traversée en le dégageant de l'ouverture 9 par simple poussée ou traction.

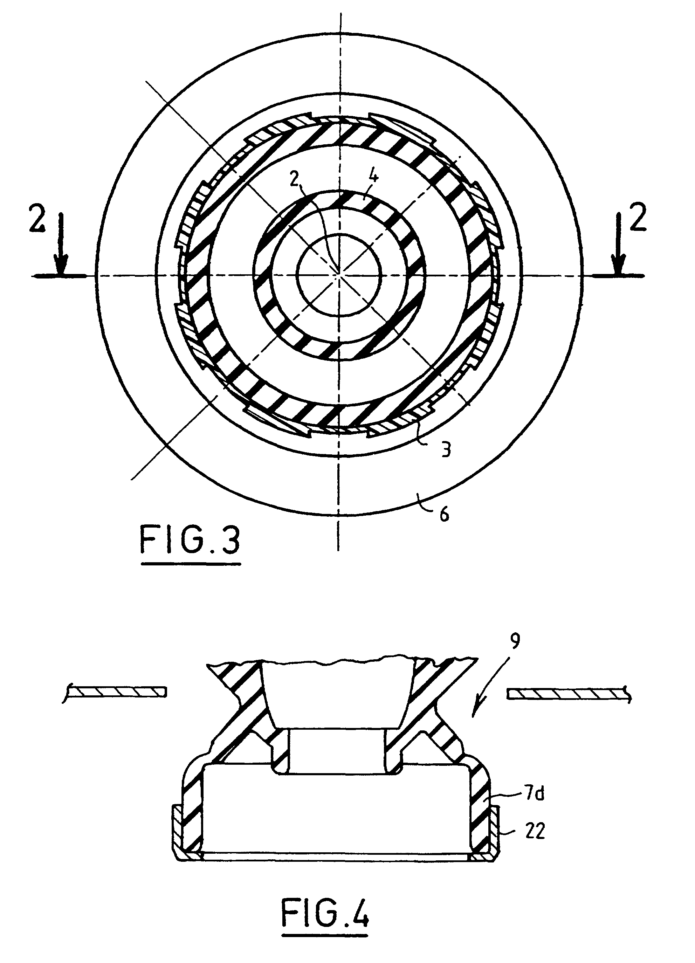

Comme il est visible sur la figure 4, pour faciliter l'introduction de la seconde lèvre 7 à travers l'ouverture 9 lors du montage du dispositif 1, on peut placer une bague de montage 22 dont le diamètre extérieur est inférieur au diamètre de l'ouverture 9 autour d'une partie d'extrémité de la seconde lèvre d'étanchéité 7 maintenue ainsi dans une position rabattue 7d, au-delà de la position stable 7b.

Après introduction et fixation du dispositif 1 dans l'ouverture 9, on enlève la bague de montage 22 par traction de manière à libérer la lèvre 7 qui est alors repoussée en position d'étanchéité 7c contre le garnissage 14 de l'habitacle 12.

La bague 22 peut être fendue de manière à pouvoir la dégager du faisceau qui est mis en place préalablement dans le dispositif de traversée et à la réutiliser pour un autre montage.

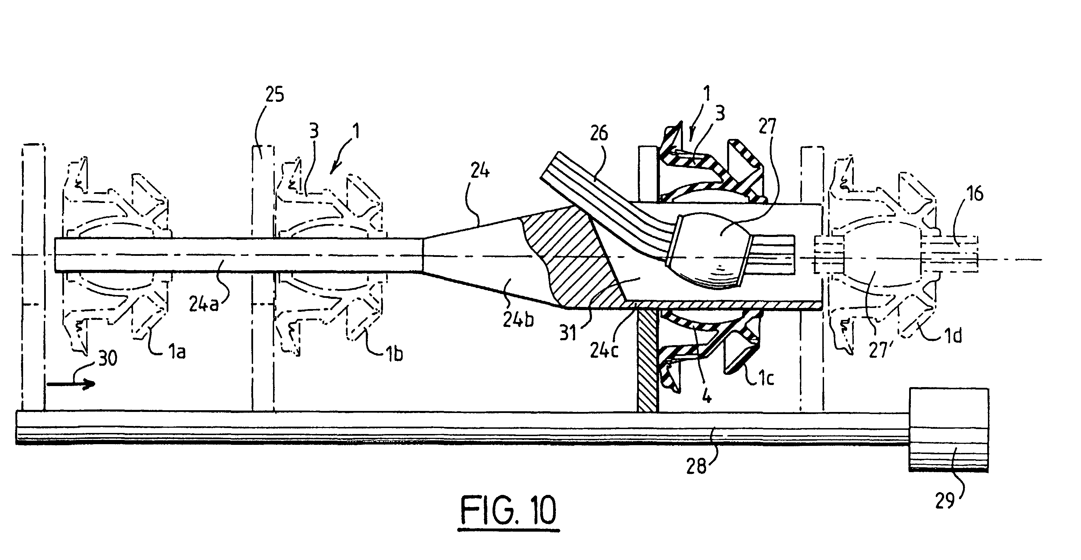

Comme il est visible sur la figure 10, pour introduire le faisceau électrique à l'intérieur de la partie centrale 4 du dispositif de fixation et de traversée 1, et en particulier pour réaliser la mise en place de l'olive solidaire du faisceau électrique, on réalise l'expansion diamétrale maximale de la partie centrale 4 de la pièce de traversée 1 sur un mandrin tronconique 24 par poussée sur le dispositif 1 à l'aide d'un poussoir 25, puis on introduit l'olive 27 et le faisceau de câbles 26 par une ouverture du mandrin 24, avant de les faire passer dans la partie centrale élargie du dispositif 1.

Pour faciliter la dilatation diamétrale du corps en matériau élastomère du dispositif d'étanchéité 1, on place l'agrafe de la bague 3 en position d'ouverture.

Lorsque le corps en matériau élastomère du dispositif 1 quitte le mandrin 24, il se resserre par élasticité sur l'olive 27 et le faisceau 26 dont le serrage est assuré au niveau de deux parties annulaires de la partie centrale 4 de part et d'autre du logement 5 de l'olive 27.

Lorsque le faisceau a été mis en place à l'intérieur du dispositif de traversée qui est lui-même fixé dans l'ouverture traversant le tablier du véhicule automobile, comme représenté sur la figure 2, l'ensemble constitué par le dispositif de traversée et le faisceau assure une très bonne isolation en particulier acoustique entre le compartiment moteur et l'habitacle du véhicule automobile, au niveau de l'ouverture 9 traversant le tablier 8. En effet, le faisceau électrique 26 et l'olive 27 solidaire du faisceau 26 empêchent la propagation des ondes acoustiques entre le compartiment moteur et l'habitacle, dans la partie centrale de la traversée. De même, la partie de jonction 17 entre la partie centrale du dispositif d'étanchéité et les parois 15 et 16 de la partie externe, qui présente une forte épaisseur dans la direction axiale de la traversée, permet d'arrêter les ondes acoustiques.

Enfin, les deux parois 15 et 16, séparées l'une de l'autre par une certaine distance dans la direction axiale, ménagent entre elles une zone annulaire remplie d'air, de sorte que les ondes acoustiques sont également arrêtées de manière très efficace par la partie externe du dispositif de traversée étanche 1.

Le dispositif de traversée étanche suivant l'invention tel qu'il a été décrit peut donc être mis en place et fixé facilement et rapidement dans l'ouverture 9 du tablier. La fixation du dispositif de traversée étanche sur le tablier a d'autre part une bonne résistance à l'arrachement et peut permettre une mise en place facilitée du faisceau dans sa partie interne.

Enfin, le dispositif de traversée étanche suivant l'invention permet d'assurer une très bonne isolation acoustique entre le compartiment moteur et l'habitacle du véhicule automobile, en particulier dans sa partie externe comportant la seconde lèvre d'étanchéité rabattue contre le garnissage sur la surface externe du tablier dirigée vers l'habitacle.

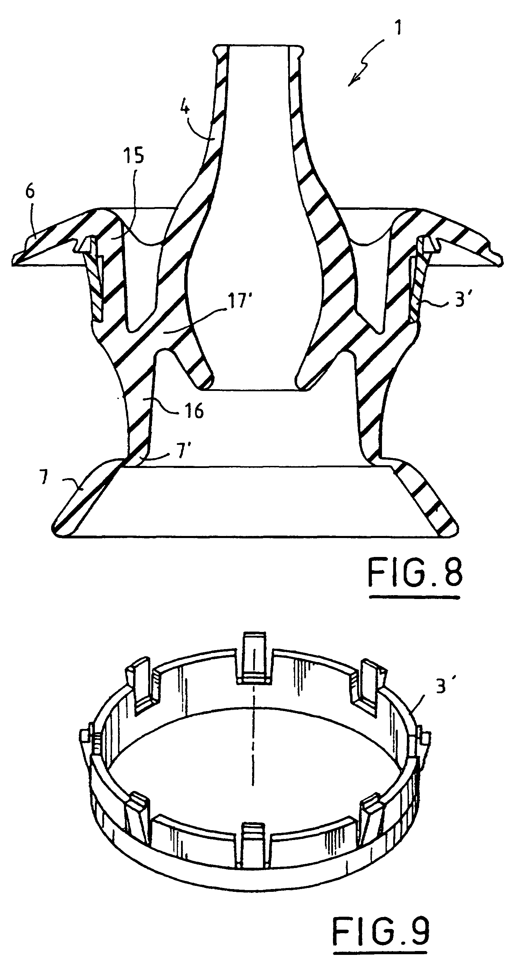

Sur les figures 8 et 9, on a représenté une variante de réalisation du dispositif de traversée étanche suivant l'invention, qui peut être utilisé de manière satisfaisante mais qui présente néanmoins de moins bonnes caractéristiques d'isolation acoustique et procure des conditions moins satisfaisantes d'engagement du faisceau.

Les éléments correspondants sur les figures 8 et 9 d'une part et 1 à 7 d'autre part portent les mêmes repères.

La structure générale du dispositif de traversée 1 suivant la variante de réalisation est identique à la structure générale du dispositif décrit plus haut et représenté sur les figures 1 à 7.

En particulier, le dispositif de traversée 1 selon la variante comporte un corps central 4 destiné à recevoir une olive incorporée au faisceau électrique dont la traversée 1 assure le passage à travers le tablier d'un véhicule automobile. Le dispositif de traversée 1 comporte d'autre part une partie externe ayant une première lèvre 6 et une seconde lèvre 7 dont une partie déformable 7' permet le déplacement entre deux positions stables rabattues en direction de l'habitacle et en direction du compartiment moteur du véhicule automobile, respectivement.

A la différence du dispositif décrit plus haut représenté sur les figures 1 à 7, les parois 15 et 16 en élastomère venues de matière avec les lèvres 6 et 7 et avec la partie centrale 4 du dispositif de traversée 1 ne sont pas reliées à la partie centrale de manière séparée, dans une zone 17 de forte épaisseur, mais par l'intermédiaire d'une paroi 17'. Les ondes acoustiques ne sont pas arrêtées de manière aussi efficace par la paroi 17' que par la zone 17 de forte épaisseur du corps du dispositif de traversée.

En outre, la bague de fixation 3' fixée par surmoulage sur le corps en élastomère du dispositif de traversée 1 est réalisée sous une forme annulaire continue et ne comporte pas de partie de jonction sous la forme d'une agrafe. De ce fait, il n'est pas possible d'ouvrir la bague 3' pour favoriser l'expansion diamétrale du corps du dispositif de traversée, lors de l'introduction du faisceau électrique.

Le dispositif de traversée selon l'invention représenté sur les figures 8 et 9, qui est d'une conception plus simple que le dispositif représenté sur les figures 1 à 7, ne présente donc pas tous les avantages fonctionnels de ce dispositif.

Sur la figure 10, on a représenté un dispositif de traversée 1 dans diverses positions successives 1a, 1b, 1c et 1d d'engagement sur le mandrin 24 et sur le faisceau 26 muni de l'olive 27.

Comme il est visible sur la figure 10, le mandrin 24 de l'installation permettant l'engagement du faisceau 26 dans le dispositif de traversée 1 comporte un axe cylindrique 24a à petit diamètre, un tronçon 24b d'écartement de forme tronconique et une partie évidée 24c de forme globalement cylindrique comportant une rainure centrale 31 permettant l'engagement du faisceau 26 et de l'olive 27 à travers le dispositif de traversée dont la partie centrale tubulaire 4 est poussée diamétralement par le mandrin 24.

Le mandrin 24 est fixé dans une disposition horizontale à l'intérieur du bâti (non représenté) de l'installation d'engagement du faisceau. L'installation comporte un ensemble d'entraînement 28 comportant un moteur 29 et une vis sans fin en prise avec le poussoir 25 dont la vis assure le déplacement dans le sens de la flèche 30 pour déplacer le dispositif de traversée 1 à partir de la position de départ 1a où la partie centrale tubulaire du dispositif est engagée sur l'extrémité de l'axe 24a jusqu'à la position 1d d'engagement sur l'olive 27 et le faisceau 26. On a représenté les différentes positions successives du poussoir 25 correspondant aux positions 1a, 1b, 1c et 1d du dispositif de traversée 1, sur la figure 10.

Le dispositif de traversée est d'abord déplacé par le poussoir 25, le long de l'axe 24a, puis le long de la partie tronconique d'écartement 24b.

Le dispositif de traversée est expansé diamétralement par la partie tronconique d'écartement 24b jusqu'à ce qu'on obtienne l'expansion maximale de sa partie centrale 4 correspondant à la position 1c sur la partie évidée 24c du mandrin.

Le faisceau 26 et l'olive 27 sont introduits dans la rainure 31 de la partie évidée 24c du mandrin puis le faisceau et l'olive sont déplacés par poussée ou traction jusqu'à ce que l'olive atteigne la position 27' à l'extérieur de la partie évidée 24c du mandrin.

Lorsque le dispositif de traversée parvient dans sa position 1d à l'extrémité du mandrin 24 il s'engage sur l'olive 27 et assure, par rétraction élastique de sa partie centrale 4, son assemblage avec le faisceau 26. L'étanchéité entre le dispositif de traversée et l'olive est réalisée par un léger serrage. Des stries réalisées sur la partie de contact du dispositif de traversée permettent d'améliorer l'étanchéité. On peut alors faire passer l'ensemble du faisceau dans la rainure 31 du mandrin et libérer le mandrin. Pour faciliter le glissement du corps en caoutchouc du dispositif de traversée sur le mandrin, on peut utiliser un mandrin dont la surface, au moins dans sa partie 24b, est chromée et comporte des rainures hélicoïdales de graissage.

De manière générale, l'invention ne se limite pas strictement aux modes de réalisation qui ont été décrits.

C'est ainsi qu'on peut imaginer un dispositif de traversée dont la partie centrale et la partie externe ont des formes différentes de celles qui ont été décrites, la partie externe comportant cependant toujours deux lèvres d'étanchéité dont l'une qui est destinée à venir du côté de l'habitacle du véhicule automobile est une lèvre rabattable.

De même, la bague de fixation en matière plastique peut présenter une forme différente de celles qui ont été décrites.

Le matériau élastomère constituant le corps du dispositif de traversée et le matériau plastique constituant la bague de fixation peuvent être constitués de substances très diverses dont les propriétés sont adaptées à l'utilisation et aux caractéristiques voulues pour le dispositif de traversée étanche du faisceau électrique. Toutefois, la matière plastique de la bague de fixation doit toujours présenter une dureté sensiblement supérieure à la dureté de la matière élastomère du corps du dispositif de traversée.

## Revendications

1. Dispositif de traversée étanche d'un faisceau électrique par une ouverture de passage (9) du faisceau à travers un tablier (8) d'un véhicule automobile, séparant le compartiment moteur (10) de l'habitacle (12) du véhicule automobile, réalisé sous la forme d'une pièce de révolution en matériau élastomère comportant une partie interne (4) de forme générale tubulaire destinée à recevoir une olive solidaire du faisceau électrique et une partie externe coaxiale à la partie interne comprenant une première (6) et une seconde (7) lèvres d'étanchéité annulaires destinées à venir en appui respectivement sur une surface externe (11) du tablier (8) du côté du compartiment moteur (10) et sur une surface externe (14) du tablier (8) du côté de l'habitacle (12), autour de l'ouverture de traversée (9), **caractérisé par le fait que** la seconde lèvre d'étanchéité annulaire (7) est constituée par une jupe évasée comportant une zone annulaire (7') déformable élastiquement pour permettre le déplacement par pivotement autour de la zone annulaire (7') d'une partie au moins de la jupe comportant un bord d'extrémité libre constituant la partie de la jupe dont le diamètre est maximal, entre une première position stable (7b) dans laquelle la jupe est rabattue vers une extrémité du dispositif dirigée vers l'habitacle (12) et une seconde position stable (7a) dans laquelle la jupe est rabattue vers une extrémité du dispositif (1) dirigée vers le compartiment moteur (10) du véhicule, dans la position de montage du dispositif (1) sur le véhicule automobile.

2. Dispositif de traversée suivant la revendication 1, **caractérisé par le fait qu'**il comporte de plus une bague (3, 3') de fixation du dispositif (1) sur le tablier (8) du véhicule automobile, au niveau de l'ouverture de passage (9) du faisceau, solidaire de la pièce en matériau élastomère du dispositif (1) et constituée d'une matière plastique dont la dureté est supérieure à la dureté de la matière élastomère.

3. Dispositif de traversée suivant la revendication 2, **caractérisé par le fait que** la bague de fixation (3, 3') comporte une pluralité de doigts pivotants (18) destinés à venir en appui par rappel élastique contre une partie (11) du tablier (8), à l'opposé de la surface externe du tablier (8) dirigée du côté du compartiment moteur (10) sur laquelle la première lèvre d'étanchéité (6) est en appui, de manière que la première lèvre d'étanchéité (6) et les doigts (18) de la bague de fixation (3, 3') assurent la fixation du dispositif de traversée (1) sur le tablier (8).

4. Dispositif de traversée suivant l'une quelconque des revendications 1 à 3, **caractérisé par le fait que** la première lèvre d'étanchéité (6) et la seconde lèvre d'étanchéité (7) sont reliées à la partie centrale (4) du dispositif de traversée (1), par l'intermédiaire de parois respectives (15, 16) reliées à la partie centrale (4) du dispositif de traversée (1), suivant une zone (17) de la pièce en élastomère du dispositif de traversée (1) de forte épaisseur dans la direction axiale (2) du dispositif de traversée (1).

5. Dispositif de traversée suivant l'une quelconque des revendications 1 à 4, **caractérisé par le fait que** la bague de fixation (3) du dispositif (1) comporte une zone de jonction (19) dans laquelle deux bords séparés de la bague (3) peuvent être reliés ou séparés par l'intermédiaire d'une agrafe (20, 21).

6. Dispositif de traversée suivant l'une quelconque des revendications 1 à 5, **caractérisé par le fait qu'**il comporte de plus une bague de montage (22) susceptible d'être engagée sur la seconde lèvre d'étanchéité (7) pour la maintenir dans une position rabattue (7d) vers la partie d'extrémité de la pièce en élastomère dirigée vers l'habitacle du véhicule, pour faciliter l'engagement et la mise en place de la pièce de traversée (1) dans l'ouverture de passage (9) du tablier (8), la bague de montage (22) étant de préférence fendue pour être dégagée du faisceau (26) engagé dans le dispositif de traversée (1).

7. Dispositif de traversée suivant l'une quelconque des revendications 1 à 6, **caractérisé par le fait que**, dans la position de montage du dispositif de traversée (1) sur le véhicule automobile, la partie de la jupe de la seconde lèvre d'étanchéité (7) à déplacement par pivotement est rabattue en direction du compartiment moteur (10) du véhicule automobile, de manière à venir en appui par son bord libre sur la surface externe (14) du tablier (8) dirigée vers l'habitacle (12), dans une position (7c) intermédiaire entre sa première et sa seconde positions stables (7b, 7a).

8. Procédé de montage d'un faisceau électrique (26) dans un dispositif de traversée étanche (1) du faisceau électrique (26) à travers une ouverture (9) de passage d'un tablier (8) de véhicule automobile selon l'une quelconque des revendications 1 à 7, **caractérisé par le fait qu'**on engage une partie centrale de forme tubulaire (4) du dispositif de traversée (1) sur un mandrin (24) ayant une partie (1b) de forme tronconique, qu'on déplace le dispositif de traversée (1) suivant la direction axiale du mandrin (24) de manière à réaliser l'expansion diamétrale de la partie centrale (4) du dispositif de traversée (1), par poussée sur le dispositif de traversée, jusqu'à une position d'expansion diamétrale maximale de la partie centrale du dispositif de traversée (1), qu'on introduit le faisceau de câbles (26) solidaire d'une olive (27) dans une rainure (31) du mandrin (24), qu'on déplace le faisceau et l'olive à travers le mandrin (24) et le dispositif de traversée (1) jusqu'à ce que l'olive (27) soit à l'extérieur du mandrin (24) et qu'on déplace le dispositif de traversée (1) jusqu'à une position à l'extrémité du mandrin (24) dans laquelle le dispositif de traversée (1) s'engage sur l'olive (27) et assure par rétraction élastique de sa partie centrale (4) son assemblage avec le faisceau (26).

## Patentansprüche

1. Vorrichtung zum dichten Durchführen eines elektrischen Leiterbündels durch eine Öffnung (9) zum Durchgang des Bündels durch eine Wand (8) eines Kraftfahrzeuges, die das Motorabteil (10) vom Fahrgastraum (12) des Kraftfahrzeuges trennt, welche in Form eines Rotationskörpers aus einem elastomeren Material verwirklicht ist, der einen inneren Teil (4) mit im wesentlichen Rohrform, der dazu bestimmt ist, einen fest am elektrischen Leiterbündel angebrachten olivenförmigen Zwischenteil aufzunehmen, und einen äußeren Teil koaxial zum inneren Teil umfasst, der eine erste und eine zweite ringförmige Dichtlippe (7) umfasst, die dazu bestimmt sind, jeweils zur Anlage an eine Außenfläche (11) der Wand (8) auf der Seite des Motorabteils (10) und an eine Außenfläche (14) der Wand (8) auf der Seite des Fahrgastraumes (12) um die Durchgangsöffnung (9) herum zu kommen, **dadurch gekennzeichnet, dass** die zweite ringförmige Dichtlippe (7) aus einer sich erweiternden Glocke besteht, die einen Ringbereich (7') umfasst, der elastisch verformbar ist, um eine Schwenkbewegung um den Ringbereich (7') wenigstens eines Teils der Glocke zu ermöglichen, der einen äußeren freien Rand umfasst, der den Teil der Glocke bildet, dessen Durchmesser maximal ist, und zwar zwischen einer ersten stabilen Position (7b), in der die Glocke von der Vorrichtung nach außen in Richtung zum Fahrgastraum (12) umgeschlagen ist, und einer zweiten stabilen Position (7a), in der die Glocke zu einem Ende der Vorrichtung (1) umgeschlagen ist, das zum Motorabteil (10) des Fahrzeuges gerichtet ist, wenn sich die Vorrichtung (1) in der Montageposition am Kraftfahrzeug befindet.

2. Vorrichtung zum Durchführen nach Anspruch 1, **dadurch gekennzeichnet, dass** sie weiterhin einen Ring (3, 3') zum Befestigen der Vorrichtung (1) an der Wand (8) des Kraftfahrzeuges auf der Höhe der Öffnung (9) zum Durchgang des Leiterbündels umfasst, der fest an dem Teil aus einem elastomeren Material der Vorrichtung (1) angebracht ist und aus einem plastischen Material besteht, dessen Härte größer als die Härte des elastomeren Materials ist.

3. Vorrichtung zum Durchführen nach Anspruch 2, **dadurch gekennzeichnet, dass** der Befestigungsring (3, 3') mehrere Schwenkzapfen (18) umfasst, die dazu bestimmt sind, durch elasitsche Rückstellung an einem Teil (11) der Wand (8) der Außenfläche der Wand (8) gegenüber zur Anlage zu kommen, die zur Seite des Motorabteils (10) gerichtet ist und an der die erste Dichtlippe (6) anliegt, derart, dass die erste Dichtlippe (6) und die Zapfen (18) des Befestigungsrings (3, 3') die Befestigung der Vorrichtung (1) zum Durchführen an der Wand (8) sicherstellen.

4. Vorrichtung zum Durchführen nach einem der Ansprüche 1 bis 3, **dadurch gekennzeichnet, dass** die erste Dichtlippe (6) und die zweite Dichtlippe (7) mit einem mittleren Teil (4) der Vorrichtung (1) zum Durchführen über jeweilige Wände (15, 16) verbunden sind, die mit dem mittleren Teil (4) der Vorrichtung (1) zum Durchführen entlang eines Bereiches (17) des elastomeren Teils der Vorrichtung (1) zum Durchführen verbunden sind, der eine größere Stärke in axialer Richtung (2) der Vorrichtung (1) zum Durchführen hat.

5. Vorrichtung zum Durchführen nach einem der Ansprüche 1 bis 4, **dadurch gekennzeichnet, dass** der Befestigungsring (3) der Vorrichtung (1) einen Anschlussbereich (19) umfasst, in dem zwei getrennte Borde des Rings (3) mittels einer Klammer (20, 21) verbunden oder getrennt sein können.

6. Vorrichtung zum Durchführen nach einem der Ansprüche 1 bis 5, **dadurch gekennzeichnet, dass** sie weiterhin einen Montagering (22) umfasst, der auf der zweiten Dichtlippe (7) in Eingriff kommen kann, um ihn in einer Position (7d) zu halten, in der der Außenbereich des elastomeren Teils in Richtung auf die Fahrgastzelle umgeschlagen ist, um die Ineingriffnahme und das Anordnen des Durchgangsteils (1) in der Öffnung (9) zum Durchgang in der Wand (8) zu erleichtern, wobei der Montagering (22) vorzugsweise geschlitzt ist, so dass er von dem Leiterbündel (26) gelöst ist, das in der Vorrichtung (1) zum Durchführen in Eingriff genommen wird.

7. Vorrichtung zum Durchführen nach einem der Ansprüche 1 bis 6, **dadurch gekennzeichnet, dass** in der Montageposition der Vorrichtung (1) zum Durchführen am Kraftfahrzeug der Teil der Glocke der zweiten Dichtlippe (7) zur Schwenkbewegung in Richtung des Motorabteils (10) des Kraftfahrzeuges so umgeschlagen ist, dass er zur Anlage mit seinem freien Rand an der Außenfläche (14) der Wand (8) kommt, die zur Fahrgastzelle (12) gerichtet ist, und zwar in einer Zwischenposition (7c) zwischen seiner ersten und seiner zweiten stabilen Position (7b, 7a).

8. Verfahren zum Montieren eines elektrischen Leiterbündels (26) in einer Vorrichtung (1) zum dichten Durchführen des elektrischen Leiterbündels (26) durch eine Öffnung (9) zum Durchgang durch eine Wand (8) des Kraftfahrzeuges nach einem der Ansprüche 1 bis 7, **dadurch gekennzeichnet, dass** man einen mittleren Teil (4) in Rohrform der Vorrichtung (1) zum Durchführen, die einen Teil (1b) in Form eines Kegelstumpfes aufweist, auf einem Dorn (24) anordnet, dass man die Vorrichtung (1) zum Durchführen in axialer Richtung des Dorns (24) so versetzt, dass eine diametrale Ausdehnung des mittleren Teils (4) der Vorrichtung (1) zum Durchführen dadurch bewirkt wird, dass die Vorrichtung zum Durchführen einem Druck ausgesetzt wird, bis eine maximale diametrale Ausdehnungsposition des mittleren Teils der Vorrichtung (1) zum Durchführen erreicht ist, dass man das Kabelbündel (26), das fest mit einem olivenförmigen Zwischenstück (27) verbunden ist, in eine Einkerbung (31) des Dorns (24) einführt, dass man das Bündel und das olivenförmige Zwischenstück durch den Dorn (24) und die Vorrichtung (1) zum Durchführen verschiebt, bis das olivenförmige Zwischenstück (27) sich am Ende des Dorns (24) befindet, und dass man die Vorrichtung (1) zum Durchführen bis zu einer Position am Ende des Dorns (24) versetzt, in der die Vorrichtung (1) zum Durchführen mit dem olivenförmigen Zwischenstück (27) in Eingriff steht und über ein elastischen Zusammenziehen des mittleren Teils (4) dessen Zusammenfügen mit dem Bündel (26) sichergestellt ist.

## Claims

1. Sealed penetration device for a wiring harness to pass through an opening (9) in a bulkhead (8) of a motor vehicle, separating the engine compartment (10) from the passenger compartment (12) of the motor vehicle, made in the form of an axisymmetric part made of an elastomer, having an internal portion (4) of tubular general shape intended to house an olive fastened to the wiring harness and an external portion, coaxial with the internal portion, comprising first (6) and second (7) annular sealing lips intended to bear on an external surface (11) of the bulkhead (8) on the side facing the engine compartment (10) and on an external surface (14) of the bulkhead (8) on the side facing the passenger compartment (12), respectively, around the penetration opening (9), **characterized in that** the second annular sealing lip (7) is formed by a flared skirt having an elastically deformable annular region (7') for allowing at least a portion of the skirt, including a free end edge constituting that portion of the skirt whose diameter is the maximum, to move, by pivoting about the annular region (7'), between a first stable position (7b) in which the skirt is bent back towards that end of the device directed towards the passenger compartment (12) and a second stable position (7a) in which the skirt is bent back towards that end of the device (1) directed towards the engine compartment (10) of the vehicle, in the position in which the device (1) is mounted on the motor vehicle.

2. Penetration device according to Claim 1, **characterized in that** it furthermore includes a ring (3, 3') for fixing the device (1) to the bulkhead (8) of the motor vehicle, at the opening (9) through which the harness passes, fastened to the part made of an elastomer of the device (1) and formed from a plastic whose hardness is greater than the hardness of the elastomer.

3. Penetration device according to Claim 2, **characterized in that** the fixing ring (3, 3') has a plurality of pivoting fingers (18) designed to bear, by springback, against a portion (11) of the bulkhead (8), the said portion being on the opposite side from the external surface of the bulkhead (8) facing the engine compartment (10) on which the first sealing lip (6) bears, so that the first sealing lip (6) and the fingers (18) of the fixing ring (3, 3') ensure that the penetration device (1) is fixed to the bulkhead (8).

4. Penetration device according to any one of Claims 1 to 3, **characterized in that** the first sealing lip (6) and the second sealing lip (7) are linked to the central portion (4) of the penetration device (1) via respective walls (15, 16) that are linked to the central portion (4) of the penetration device (1), in a region (17) of the part made of an elastomer of the penetration device (1) having a large thickness in the axial direction (2) of the penetration device (1).

5. Penetration device according to any one of Claims 1 to 4, **characterized in that** the ring (3) for fixing the device (1) has a junction region (19) in which two separate edges of the ring (3) may be linked together by a fastener (20, 21) or may be separated.

6. Penetration device according to any one of Claims 1 to 5, **characterized in that** it furthermore includes a mounting ring (22) that can be engaged on the second sealing lip (7) in order to keep it in a position (7d) bent back towards the end portion of the elastomer part facing the passenger compartment of the vehicle, in order to make it easier to engage and fit the penetration part (1) into the passage opening (9) in the bulkhead (8), the mounting ring (22) preferably being split in order to be disengaged from the harness (26) engaged in the penetration device (1).

7. Penetration device according to any one of Claims 1 to 6, **characterized in that**, in the position in which the penetration device (1) is mounted on the motor vehicle, that part of the skirt of the second sealing lip (7) able to move by pivoting is bent back towards the engine compartment (10) of the motor vehicle, so as to bear by its free edge on that external surface (14) of the bulkhead (8) facing the passenger compartment (12), in a position (7c) intermediate between its first stable position and its second stable position (7b, 7a).

8. Method of mounting a wiring harness (26) in a sealed penetration device (1) for the wiring harness (26) through a passage opening (9) in a bulkhead (8) of a motor vehicle according to any one of Claims 1 to 7, **characterized in that** a central portion (4) of tubular shape of the penetration device (1) is engaged on a mandrel (24) having a frustoconical portion (1b), **in that** the penetration device (1) is moved along the axial direction of the mandrel (24) so as to cause the diametral expansion of the central portion (4) of the penetration device (1), by pushing on the penetration device, as far as a position of maximum diametral expansion of the central portion of the penetration device (1), **in that** the cable harness (26) fastened to an olive (27) is introduced into a groove (31) in the mandrel (24), **in that** the harness and the olive are moved through the mandrel (24) and the penetration device (1) until the olive (27) is outside the mandrel (24) and **in that** the penetration device (1) is moved to a position, at the end of the mandrel (24), in which the penetration device (1) is engaged on the olive (27) and, owing to the elastic retraction of its central portion (4), ensures that it is joined to the harness (26).
